# FASCICULE DE BREVET EUROPEEN

(11) **EP 3 423 638 B1**
(45) Date de publication et mention de la délivrance du brevet: **05.08.2020**
(21) Numéro de dépôt: 17726126.0
(22) Date de dépôt: 23.02.2017
(51) Int. Cl.: E02D 17/06, F24F 5/00, F24T 10/15, F24T 10/30, F28D 20/00

(54) **PUITS COMPOSITE MULTIFONCTIONS**
MULTIFUNKTIONSVERBUNDSCHACHT
MULTIFUNCTIONAL COMPOSITE SHAFT

(30) Priorité: 01.03.2016 FR 1600353
(43) Date de publication de la demande: 09.01.2019
(73) Titulaire: VARIATION SAS, Saint André Lez Lille 59350 (FR)
(72) Inventeur: VASSAL, Gérard, 59130 Lambersart (FR)
(74) Mandataire: Cabinet Rifflart Vandenbossche
(86) Numéro de dépôt international: PCT/FR2017/000035
(87) Numéro de publication internationale: WO 2017/149210

(56) Documents cités:
- FR-A1- 2 918 086

## Description

La présente invention concerne un procédé de réalisation d'un puits de fondation composite de faible à moyenne profondeur intégrant en un seul élément différentes fonctions telles que « structure de fondation », « récupération et gestion de l'eau pluviale », « infiltration en nappe des débits de fuite d'eau pluviale », « production et stockage d'énergie renouvelable géothermique et géo-solaire », «suivi des consommations en eau et en énergie, et pilotage du système ». Plusieurs puits sont ainsi disposés et reliés en série ou maillés, et cet ensemble est conçu pour fonctionner en réseau fermé dédié à la construction ou en réseau ouvert sur l'extérieur en partage de ressources.

Les différentes fonctions précitées sont traditionnellement mises en œuvre séparément voire associées par deux, et intéressent des spécialités faisant appel à des corps de métier différents tels que le forage en sol, le génie civil, le VRD (Voiries Réseaux Divers), le génie climatique, la plomberie, le génie électrique etc...

L'optimisation technique issue du procédé qui résulte de cette intégration apporte une réponse technico-économique globale qui améliore la prise en compte de partis pris environnementaux dans le cadre de la construction ou de l'adaptation de tout type de bâtiment. Elle est une voie vers la conception de bâtiments passifs et/ou producteurs d'énergie et permet la mise en commun sous forme de réseaux-partage de ressources en eau et en énergie.

On observe que le foncier disponible pour les constructions neuves présente très souvent des complexités de fondation soit parce qu'il fait partie de zones vierges plus ou moins volontairement délaissées, soit parce qu'il s'inscrit en lieu et place d'anciennes constructions déconstruites. Il existe donc très souvent un surcoût lié à la mise en œuvre de fondations renforcées pour lesquelles on recherche une assise plus profonde pour assurer la descente de charges. Le puits de fondation de faible à moyenne profondeur fait partie des solutions apportées à cette problématique.

La technique des puits de fondation fait généralement appel à la mise en œuvre de forages de gros diamètre (80 à 150 cm), pouvant utiliser un blindage selon leur profondeur et la nature des couches de terrain rencontrées. Un épuisement ponctuel de la nappe phréatique peut aussi être requis.

Le fonctionnement le plus courant de ce type de fondation consiste à reporter les efforts de réduction des charges appliquées en tête, en les transposant à la base de l'ouvrage par l'intermédiaire du corps massif du puits, lequel est composé d'un béton de résistance moyenne. Il s'en suit la mise en place d'un grand volume de matière qui constitue l'essentiel du coût de la mise en œuvre correspondante.

est connu du document FR2918086 un dispositif de réalisation d'un puits de fondation composite de faible à moyenne profondeur, ledit dispositif permettant la production et stockage d'énergie renouvelable par un réseau géothermique, la production et stockage d'énergie renouvelable par un réseau géo-solaire, le tout bénéficiant d'un pilotage du suivi des caractéristiques et des consommations en eau et en énergie.

La présente invention a pour objet l'optimisation dudit dispositif divulgué dans ce document.

La solution à ce problème est présentée dans la revendication 1.

Le dispositif comporte en particulier:
- La structure porteuse de fondation constituée d'une semelle en béton armé coulée en fond de puits et d'un poteau structurant positionné dans le corps du puits
- Une cuve de récupération de l'eau pluviale dont la forme est spécialement étudiée pour épouser la rive du forage en extrados et celle du poteau en intrados, ce qui permet son interchangeabilité sans obérer la fonction porteuse de la fondation.
- Un drain vertical de bon diamètre par lequel transitent les débits de fuite d'évacuation d'eau pluviale ainsi que le trop-plein de la cuve ou du réseau de récupération d'eau pluviale, pour être infiltrés en nappe.
- Un premier réseau positionné dans la cuve permettant, par circulation à faible vitesse, la récupération ou la cession d'énergie thermique issue des échanges entre le sol environnant et l'eau de la cuve. Ce réseau relie les puits disposés en série à une pompe de circulation, l'ensemble formant par bouclage le circuit primaire d'une pompe à chaleur eau/eau réversible. Ce réseau géothermique, flexible et non gravitaire, relie chacun des puits mis en série par des tronçons de canalisations, permettant l'équilibrage naturel des niveaux d'eau dans les puits. L'ensemble se met en service par amorçage successif des tronçons dans chaque puits.
- Un deuxième réseau, de petit diamètre, comportant de l'eau éventuellement glycolée circulant à faible vitesse à l'intérieur du volume de la cuve. Ce réseau relie les puits disposés en série à une pompe de circulation, ainsi que les têtes de puits pouvant comporter un tapis solaire. L'ensemble fonctionne en bouclage fermé et permet ainsi la récupération d'apports thermiques géo-solaires par échange avec l'eau des cuves.
- Une tête de puits, déposable, composée d'un regard en béton disposant d'une fermeture amovible. La couverture peut comporter un tapis solaire protégé par un vitrage résistant et émissif. Elle dispose d'une grille anti-insectes et l'intérieur du regard comporte une isolation en chanvre. Elle permet l'accès à la tête de cuve et à sa trappe d'accès pour toutes les opérations de mise en service et d'entretien, et pour le branchement des autres réseaux.
- Un orifice disposé en tête de cuve permettant :
   ∘ Soit de brancher un réseau d'eau pluviale introduite latéralement dans le regard de tête de puits. Un by-pass mis en place dans le regard permet d'asservir l'introduction de l'eau pluviale dans la cuve à la température de l'eau de cette dernière.
   ∘ Soit de brancher un réseau d'extraction d'eau pluviale dans le volume de la cuve pour alimenter un circuit de distribution et de réutilisation de l'eau pluviale en eau non potable.
- Des capteurs de température permettant de gérer la température du circuit primaire géothermique ainsi que la température de l'incorporation des eaux pluviales dans la cuve lesquelles seront rejetées en trop plein si leur température est trop basse par rapport au circuit primaire (températures d'hiver très froides).
- Un capteur de débit du circuit géothermique.
- Une sonde de PH de l'eau pluviale avec possibilité de régulation du PH.
- Un détecteur du niveau d'eau dans les cuves
- Un dispositif de relevé et de transmission de ces données d'exploitation qui peut être couplé aux autres paramètres d'utilisation du bâtiment tels que les consommations énergétiques, électriques ou d'eau potable.
Tous ces éléments sont composés de techniques traditionnelles connues.

Selon différents type de réalisation :
- Le diamètre des puits détermine le gabarit et le volume de la cuve qui lui est associée.
- La profondeur des puits, compte tenu de la mise en place de cuves de hauteur standardisée, déterminera par différence la hauteur des semelles en fond de puits, et éventuellement des sur-profondeurs à atteindre en cohérence avec le rapport géotechnique.
- Le poteau central du puits peut utilement être légèrement excentré par rapport à l'axe de la cuve, d'une valeur inférieure ou égale au sixième du diamètre du puits. Il reçoit en tête les longrines de fondation de l'ouvrage et les porteurs ponctuels de l'ouvrage .
- La cuve peut être mise en place avant le retrait du blindage du puits si cette technique est retenue, en prenant appui sur le poteau pour l'extraire. Elle est posée sur un banc de sable positionné au-dessus de la semelle. Sa résistance lui permet de soutenir la pression horizontale des terres et de la nappe phréatique.
- Le drain vertical peut être inséré dans une enveloppe en géotextile non tissée avec mise en place d'agrégats de gros diamètre ou de galets.
- Un calfeutrement en sable humide peut être réalisé entre le sol et la cuve afin d'assurer de bons échanges thermiques latéraux avec le sol.
- La tête de puits peut être constituée d'un regard préfabriqué en béton armé avec une couverture constituée d'un cadre transparent pour l'insertion du tapis solaire. Cette dernière disposition peut n'être que partiellement retenue : par exemple pour les puits recevant le soleil toute ou partie de la journée.
- La modénature du revêtement de sol à l'avant du puits (perpendiculairement à la façade) pourra utilement permettre un terrassement « facile » pour le remplacement de la cuve.
- La gestion des paramètres de fonctionnement tels que température, débit, pH etc.. peut-être réalisée via des capteurs positionnés sur les circuits concernés. Les informations recueillies peuvent être transmises par réseaux filaires ou radio, pour être traitées hors site.
- Un traitement chimique et biologique de l'eau pourra être intégré au circuit primaire selon la destination sanitaire de l'eau (eau de baignade par exemple).
- Le suivi de ces paramètres chimiques et biologiques pourra être effectué via la transmission des données organisée pour les capteurs mis en place par ailleurs.

Les dessins annexés illustrent l'invention.

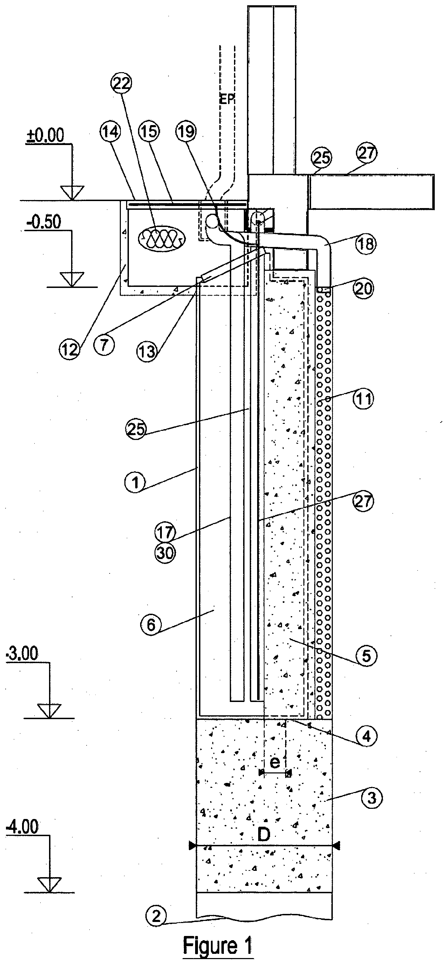

La figure 1 représente une coupe verticale sur un puits. Elle montre la composition des différents éléments d'un puits, objet de la présente invention.

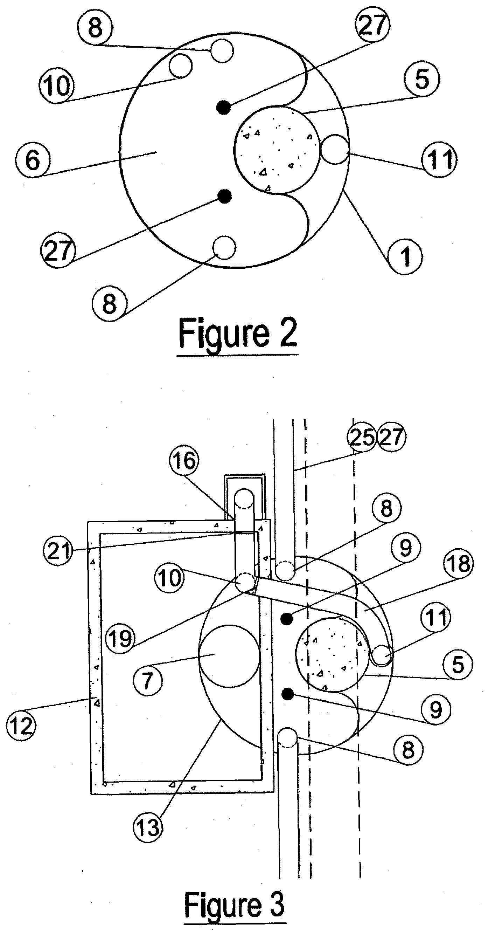

La figure 2 représente une coupe horizontale sur un puits dans le corps de la cuve.
La figure 3 représente une coupe horizontale au niveau de la tête de puits.

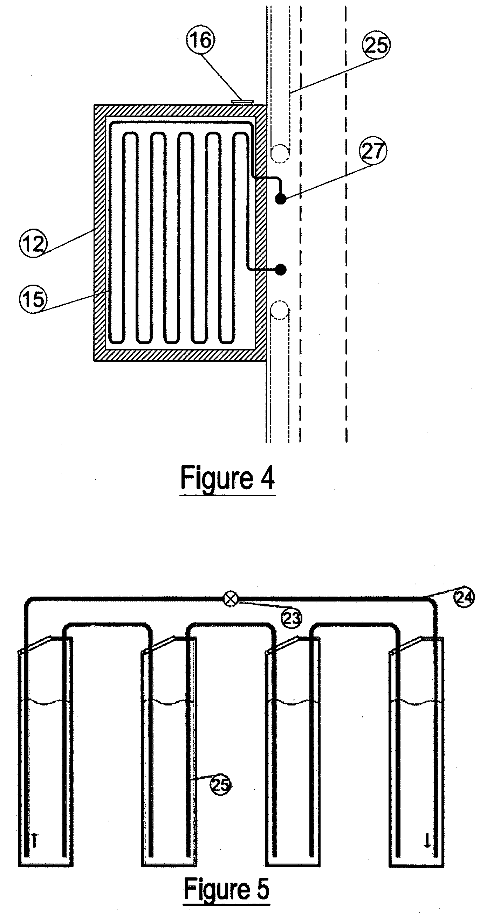

La figure 4 représente une vue d'une tête de puits équipée d'un tapis solaire.
La figure 5 représente le principe de circuit géothermique par la mise en réseau de puits

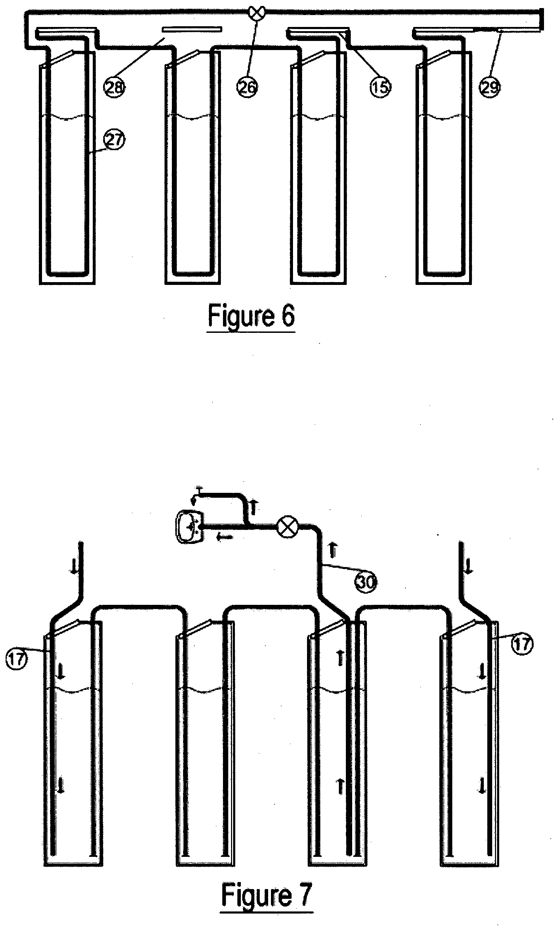

La figure 6 représente le principe de circuit géo-solaire par la mise en réseau de puits
La figure 7 représente le principe d'introduction ou d'extraction d'eau pluviale

En référence à ces dessins le dispositif comporte un corps de puits (1) réalisé préférentiellement par forage cylindrique dont la profondeur (2) atteint au minimum le niveau de référence de portance défini en cohérence avec le rapport géotechnique de la construction. Un blindage pourra être mis en place si nécessaire pendant le forage selon toute technique adaptée, ainsi qu'un épuisement des eaux de nappe. La base du puits (1) est coulée en béton, lequel comportera sur une partie au moins une cage d'armatures métalliques formant semelle (3). Un dispositif de liaison structurelle (4) béton - béton par adhérences d'armatures dans le béton ou partout système mécanique lié à une préfabrication permet d'assurer la continuité des descentes de charges avec un poteau (5).

Un poteau (5) vertical cylindrique en béton armé est positionné entre le dessus de la semelle (3) et le niveau ad'hoc permettant de recevoir en tête les longrines de fondation et éventuellement d'autres charges de réduction des efforts induits par la superstructure. Ce poteau (5) est excentré perpendiculairement à la façade et vers l'extérieur d'une valeur inférieure au 1/6 du diamètre du puits (1) ou de son épaisseur perpendiculaire à la façade si le puits (1) a une section rectangulaire ou carrée (e<D/6).

Une cuve (6) dont la forme est conçue pour épouser d'une part l'intrados du puits (1) - s'il est circulaire - et l'extrados du poteau (5) est positionnée verticalement entre le dessus de la semelle (3) et le dessous des longrines de la superstructure. La cuve (6) qui peut être en polyéthylène comporte en partie supérieure une trappe d'accès inclinée (7), deux orifices (8) pour le passage du circuit géothermique, deux orifices (9) pour le passage du circuit géo-solaire et un orifice (10) pour le passage d'un réseau d'introduction d'eau pluviale ou d'extraction d'eau non potable. Des joints souples permettent d'étancher les introductions correspondantes des canalisations dans la cuve. Chaque orifice dispose potentiellement d'un couvercle étanche de fermeture s'il n'est pas utilisé. La forme de la cuve (6) permet son interchangeabilité dans le temps.

Un drain (11) est positionné verticalement dans l'espace dégagé à l'arrière du poteau. Il est perforé horizontalement pour permettre le rejet d'eaux excédentaires dans le sol. Il est protégé par une enveloppe en géotextile non tissé et entouré de gravillons de bonne granulométrie.

La tête de la cuve (6) est accessible par un regard (12) échancré en partie inférieure pour épouser la forme de celle-ci et se solidariser avec le regard (12) via un joint souple étanche (13). La couverture (14) du regard (12) comporte (ou non suivant les besoins thermiques finaux de l'installation) un tapis géo-solaire (15) positionné à l'abri d'un vitrage épais émissif. Cette couverture (14) est amovible.

Le regard (12) comporte latéralement un orifice (16) permettant d'introduire ou d'extraire de l'eau pluviale via une canalisation adaptée.

Un système d'introduction de l'eau pluviale dans la cuve (6) est composé d'une canalisation verticale (17), d'une dérivation en by-pass (18) avec clapet (19) d'ouverture-fermeture asservi à la température de l'eau branchée dans le drain vertical (11).

La cuve (6) possède en tête un trop plein (20) également branché dans le drain vertical (11).

Une grille anti-insectes (21) est positionnée au droit de la canalisation d'introduction de l'eau pluviale.

Une isolation de masse (22), en chanvre, est positionnée dans le regard.

Lorsque les puits sont organisés en réseau, un premier circuit géothermique permet une circulation d'eau continue à faible débit via une pompe (23) reliée par un réseau extérieur (24) à un puits d'entrée et à un puits de sortie. A l'intérieur de ce circuit, les puits sont reliés successivement entre eux par un réseau sans air (25) mis en place par amorçage.

Un deuxième circuit géo-solaire permet une circulation d'eau glycolée continue à faible débit via une pompe extérieure (26) reliant un réseau fermé (27) circulant à l'intérieur des cuves (6) et entre les têtes de puits (14) équipées de tapis solaire (15).

Les têtes de puits non équipées de tapis solaire (28) sont by-passées.

Un tapis solaire extérieur au dispositif (29) peut être branché sur le circuit.

Un réseau d'extraction de l'eau pluviale (30) peut être branché dans l'un quelconque des puits pour alimenter des points d'eau non potables.

Les pompes des réseaux géothermiques (23) et géo-solaires (26) sont placées dans une armoire technique. Sur ces têtes de réseaux sont positionnés des capteurs de température et de débit pour chacun des réseaux, ainsi que potentiellement des analyseurs de pH et de traitement d'eau sur le circuit géothermique. Ces dispositions permettent un pilotage à distance de l'installation.

A titre indicatif, la hauteur de la cuve (6) est de l'ordre de 2,5m, ce qui lui confère un volume capacitif de l'ordre d'un m³ pour un diamètre de cuve (6) de 0,90m. Différentes tailles (diamètre - hauteur) sont réalisables dans le cadre de la création d'une gamme adaptée au système. Les vitesses de circulation de l'eau sont de l'ordre de 1 à 2 m³ par heure pour permettre les échanges thermiques et la stabilisation des niveaux d'eau entre les cuves.

Le dispositif selon l'invention est particulièrement destiné à la mise en place des fondations périphériques d'une construction, en associant la fonction « fondation » des ouvrages, la fonction « récupération et gestion de l'eau de pluie » (plusieurs m³ par installation), la fonction « rejet en nappe » des eaux excédentaires ou des trop pleins, la fonction « énergie primaire géothermique» potentiellement renforcée par une boucle géo-solaire extensible, la fonction « rafraichissement de la construction » et la fonction « gestion des températures et des débits », donc des consommations en énergie et en eau.

## Revendications

1. Dispositif de réalisation d'un puits de fondation composite de faible à moyenne profondeur permettant la production et stockage d'énergie renouvelable par un réseau géothermique, la production et stockage d'énergie renouvelable par un réseau géo-solaire, le tout bénéficiant d'un pilotage du suivi des caractéristiques et des consommations en eau et en énergie, ledit dipsositif est **caractérisé en ce qu'**il intègre en un seul élément un corps de puits (1) de fondation constitué d'une semelle (3) et d'un poteau (5), d'une cuve (6), d'un drain vertical (11), cet ensemble étant surmonté par un regard (12) dont la couverture (14) comporte un tapis géo-solaire (15) et destiné à fonctionner en réseau fermé dédié à une construction ou en réseau ouvert sur l'extérieur en partage de ressources, l'ensemble remplissant différentes fonctions telles que: récupération et gestion de l'eau pluviale par une amenée d'eau verticale (17) ou par par une extraction d'eau (30), infiltration en nappe des débits de fuite d'eau pluviale par rejet dans le drain vertical (11).

2. Dispositif selon la revendication 1 **caractérisé en ce que** le puits (1) réalisé en béton est composé d'une semelle (3) et d'un poteau (5) dont l'excentrement permet de dégager de la place dans le forage ou dans le terrassement pour y inclure d'autres composants.

3. Dispositif selon la revendication 1 ou la revendication 2 **caractérisé en ce que** une cuve (6) est positionnée dans le corps du puits (6) avec une forme adaptée et pourvue d'une trappe d'accès inclinée (7), de deux orifices (8) pour le passage du circuit géothermique, de deux orifices (9) pour le passage du circuit géo-solaire, d'un orifice (10) pour le passage d'un réseau d'eau pluviale et d'un trop plein (20).

4. Dispositif selon la revendication 1 ou la revendication 2 **caractérisé en ce qu'**un drain vertical (11) - ou plusieurs drains verticaux - est(sont) positionné(s) dans le corps du puits (1), à l'arrière du poteau (5)..

5. Dispositif selon l'une quelconque des revendications précédentes **caractérisé en ce que** le puits (1) composite comporte une tête de puits constituée par un regard (12) adapté par lequel transitent des réseaux géothermiques (25), géo-solaires (27), de recueil ou d'extraction d'eau pluviale (17) et de trop plein (20), avec mise en place d'une grille anti-insectes (21) et d'une isolation de masse (22), en chanvre.

6. Dispositif selon la revendication 5 **caractérisé en ce que** le regard (12) possède une couverture (14) comportant un tapis géo-solaire (15).

7. Dispositif selon l'une quelconque des revendications précédentes **caractérisé en ce que** l'association de plusieurs puits en série ou en groupes permet de constituer des réseaux géothermiques (25), géo-solaires (27), de recueil (17) ou d'extraction (30) d'eau pluviale, de rejet d'eau en nappe par un drain vertical (11), d'en relever et d'en piloter les caractéristiques techniques fonctionnelles.

## Patentansprüche

1. Vorrichtung, die sich auf ein Verfahren zur Herstellung eines Fundament Verbundschachts von geringer bis mittlerer Tiefe bezieht, für die Erzeugung und Speicherung erneuerbarer Energie durch ein Geothermie Netz (25), Erzeugung und Speicherung erneuerbarer Energie durch ein Geo-Solarnetz (27), alle von der Überwachung der Eigenschaften und des Verbrauchs von Wasser und Energie profitieren und diese ist durch die Tatsache gekennzeichnet, dass es in einem einzigen Element einen Fundament Schachtkörper (1) mit einer Platte (3) und einem Pfosten (5), einem Tank (6), einem vertikalen Abfluss (1) wird; diese Baugruppe von einem Kopf (12) überragt, dessen Abdeckung (14) einen Geo-Solar-Teppich (15) umfasst und als geschlossenes Netzwerk für einen Bau oder als nach außen geöffnetes Netz für die gemeinsame Nutzung von Ressourcen dienen fungieren soll; der Komplex erfüllt verschiedene Funktionen wie "Regenwassergewinnung und -bewirtschaftung" durch einen vertikalen Wassereinlass (17) oder durch Wassergewinnung (30), "Infiltration von Regenwasserabflüssen ins Grundwasser" durch Einleitung in einen vertikalen Abfluss (11).

2. Vorrichtung nach Anspruch 1, die **dadurch gekennzeichnet ist, dass** der Schacht (1) aus Beton eine Platte (3) und einen Pfosten (5) umfasst, deren Exzentrizität es ermöglicht, in der Bohrung oder in den Erdwerken Raum freizulassen, um andere Bestandteile einzuschließen.

3. Vorrichtung nach Anspruch 1 oder Anspruch 2, **dadurch gekennzeichnet, dass** ein Tank (6) im Körper des Schachts (6) mit einer geeigneten Form positioniert ist und mit einer geneigten Zugangstür (7), zwei Öffnungen (8) für den Durchgang des Geothermie Kreislaufs, zwei Öffnungen (9) für den Durchgang des Geo-Solarkreislaufs, einer Öffnung (10) für den Durchgang eines Regenwassernetzes und einem Überlauf (20) versehen ist.

4. Vorrichtung nach Anspruch 1 oder Anspruch 2, die **dadurch gekennzeichnet ist, dass** ein vertikaler Abfluss (11) - oder mehrere vertikale Abflüsse - im Körper des Schachts (1) an der Rückseite des Pfostens (5) positioniert ist (sind).

5. Vorrichtung nach einem der vorhergehenden Ansprüche, **dadurch gekennzeichnet, dass** der Verbundschacht (1) einen Kopf mit einem geeigneten Öffnen (12) enthält, durch den die geothermischen (25) und geosolaren (27) Röhren durchdringen, sowie die Regenwassersammlung oder -extraktion (17) und die Überlauf (20), und mit die Installation eines Anti-Insekten-Grill (21) und einer Isolierung (22) von Hanf

6. Vorrichtung nach Anspruch 5, die **dadurch gekennzeichnet ist, dass** der Schacht (12) eine Abdeckung (14) mit einem Geo-Solar-Teppich (15) hat.

7. Vorrichtung nach einem der vorhergehenden Ansprüche gekennzeichnet, dass durch die Verbindung von mehreren Schächten in Reihe oder in Gruppen es zu bilden ermöglicht, geothermische Netze (25), Geo-Solar (27), Sammlung (17) oder Extraktion
(30) von Regenwasser, Wasserdurchfluss durch einen vertikalen Ablauf

## Claims

1. Device relating to a method for making a composite foundation shaft of low to medium depth for the production and storage of renewable energy by a geothermal grid, the production and storage of renewable energy by a geosolar network, all benefiting from a control of the monitoring of characteristics and consumption of water and energy, said device is **characterized in that** it incorporates in a single element a foundation shaft (1) body comprising a slab (3) and a post (5), a tank (6), a vertical drain (11), this assembly is surmounted by a manhole (12) whose cover (14) comprises a geo-solar carpet (15) and is intended to operate as a closed network dedicated to a construction or as network open to the outside for sharing of resources, where the assembly fulfils various functions such as "rainwater harvesting and management" through a vertical water inlet (17), or by water extraction (30), "infiltration of rain water run-off flows into groundwater" by discharge into a vertical drain (11)

2. Device according to claim 1 **characterised in that** the shaft (1) made of concrete comprises a slab (3) and a post (5) whose eccentricity allows space to be released in the bore or in the earthworks to include other components.

3. Device according to claim 1 or claim 2, **characterised in that** a tank (6) is positioned in the body of the shaft (6) having a suitable shape and provided with an inclined access door (7), two orifices (8) for passage of the geothermal circuit, two orifices (9) for passage of the geo-solar circuit, one orifice (10) for passage of a rainwater network and one overflow (20).

4. Device according to claim 1 or claim 2 **characterised in that** a vertical drain (11)-or several vertical drains-is (are) positioned in the body of the shaft (1), at the rear of the post (5).

5. Device according to any one of the preceding claims, **characterised in that** the composite shaft (1) comprises a shaft-head having a suitable manhole (12) through which pass the geothermal (25) and geo-solar (27) networks, the rain water collection or extraction (17) and overflow (20) networks, along with the installation of an anti-insect grill (21) and a ground insulation (22) of hemp.

6. Device according to claim 5 **characterised in that** the manhole (12) has a cover (14) and a geo-solar carpet (15)

7. Device according to any one of preceding claims **characterized in that** the association of several shafts in series or in groups makes it possible to build geothermal networks (25), geo-solar (27), collection (17) or extraction (30) of rainwater, water flow through a vertical drain (11), and identify and control its functional technical characteristics.
